# EUROPÄISCHE PATENTSCHRIFT

(11) **EP 3 868 269 B1**
(45) Veröffentlichungstag und Bekanntmachung des Hinweises auf die Patenterteilung: **03.04.2024**
(21) Anmeldenummer: 21158764.7
(22) Anmeldetag: 23.02.2021
(51) Int. Cl.: A47L 5/38

(54) **ABSPERRORGAN ZUR ANORDNUNG IN EINER SAUGLEITUNG EINER ZENTRALSTAUBSAUGANLAGE**
SHUT-OFF DEVICE FOR ARRANGEMENT IN A SUCTION LINE OF A CENTRAL VACUUM SYSTEM
ÉLÉMENT D'ARRÊT DESTINÉ À L'AGENCEMENT DANS UNE CONDUITE D'ASPIRATION D'UN SYSTÈME D'ASPIRATION CENTRALE

(30) Priorität: 24.02.2020 DE 102020104812
(43) Veröffentlichungstag der Anmeldung: 25.08.2021
(73) Patentinhaber: Robert Thomas Metall- und Elektrowerke GmbH & Co. KG, 57290 Neunkirchen (DE)
(72) Erfinder: HEIRMAN, Frank, 57290 Neunkirchen (DE); LICHTENTHÄLER, Dominik, 57290 Neunkirchen (DE)
(74) Vertreter: advotec.

(56) Entgegenhaltungen:
- CA-A1- 2 310 962
- US-A- 5 111 841
- US-A- 6 012 199
- US-A1- 2004 093 682
- US-A1- 2010 024 618

## Beschreibung

Die Erfindung betrifft ein Absperrorgan zur Anordnung in einer Saugleitung einer Zentralstaubsauganlage nach dem Oberbegriff des Anspruchs 1.

Zentralstaubsauganlagen sind aus dem Stand der Technik bekannt und werden vielfach in Ein- und Mehrfamilienhäusern bzw. in Bürogebäuden eingesetzt. Bei diesen Zentralstaubsauganlagen wird eine Saugeinheit zentral, beispielsweise im Kellergeschoss des Gebäudes eingebaut. Über Saugleitungen werden verschiedene Zapfstellen in den einzelnen Räumen des Gebäudes mit der Saugeinheit verbunden, so dass der in der Saugeinheit aufgebaute Unterdruck über die Saugleitungen zu den Zapfstellen vermittelt werden kann. Wird nun ein geeignetes Gerät, beispielsweise ein Saugschlauch, an einer Zapfstelle angeschlossen, so sorgt der Unterdruck in der Saugleitung für das Einsaugen der Luft durch ein geeignetes Reinigungsgerät. Die eingesaugte Luft wird dann zur zentralen Absaugeinheit gefördert, und dort mit geeigneten Filtereinrichtungen die in der Saugluft enthaltenen Verschmutzungen abgefiltert.

Um einzelne Abschnitte in den Saugleitungen, beispielsweise unmittelbar vor einer Zapfstelle selektiv schließen bzw. öffnen zu können, sind Absperrorgane der gattungsgemäßen Art bekannt. Absperrorgane können dabei auch einen erweiterten Funktionsumfang aufweisen, um eine Regulierung der Saugluftmenge zu ermöglichen. Saugleitungen im Sinne der Erfindung sind alle Leitungen, aus denen das Rohrleitungssystem der Zentralstaubsaugeranlage gebildet ist und in denen Saugluft gefördert werden kann. Die Saugluft kann dabei auch einen bestimmten Anteil von Feuchtigkeit oder Flüssigkeit enthalten und dadurch ein Fluid bilden.

Die DE 199 64 219 C2 beschreibt ein solches Absperrorgan für eine Staub sauganlage.

Diese Absperrorgane weisen eine Durchgangsöffnung auf, die zur Durchleitung der Saugluft geeignet ist. An einem Eingangsquerschnitt bzw. an einem Ausgangsquerschnitt der Durchgangsöffnung können dann die Saugleitungen, insbesondere im Bereich der Zapfstellen, angeschlossen werden, um das Absperrorgan in das Rohrleitungssystem zu integrieren. Die in der Saugleitung strömende Saugluft kann dann durch die Durchgangsöffnung im Absperrorgan durchgefördert werden. Im Gehäuse des Absperrorgans ist zusätzlich ein Sperrelement vorgesehen, das zwischen einer Sperrstellung und einer Öffnungsstellung verstellbar ist. In der Sperrstellung des Sperrelements ist die Durchgangsöffnung verschlossen, so dass die Saugluft nicht durch die Durchgangsöffnung strömen kann, sondern stattdessen der entsprechende Abschnitt der Saugleitung abgesperrt wird. Wird das Sperrelement in seine Öffnungsstellung verstellt, so wird dadurch die Durchgangsöffnung im Gehäuse des Absperrorgans geöffnet, so dass die Saugluft durch das Absperrorgan durchströmen kann. Der Sperrschieber selber ist dabei mit einer Antriebseinrichtung verbunden, mit der er zwischen der Öffnungsstellung und der Sperrstellung verstellbar ist. Als eine Antriebseinrichtung verstellbare Sperrelemente sind aus dem Stand der Technik elektrische Magnetventile oder auch elektrisch betriebene Kugelhähne bekannt. Diese bekannten motorisch antreibbaren Sperrelemente weisen den Nachteil auf, dass sie eine lange Reaktionszeit für das Öffnen bzw. Schließen des Sperrelements aufweisen, so dass es zu entsprechenden Verzögerungen bei der Steuerung der Saugleistung kommt. Außerdem weisen die bekannten Sperrelemente den Nachteil auf, dass sie hohe Leistungsverluste aufweisen und zur vorschnellen Verschmutzung neigen. Darüber hinaus erfordern die bekannten Sperrelemente einen relativ großen Bauraum, so dass derart gebildete Absperrorgane nicht oder nur bedingt für bestimmte Einsatzfelder, insbesondere nicht oder nur bedingt beim Einbau in Leichtbauwände, Verwendung finden können.

Die US 2004/093682 A1 offenbart ein Absperrorgan zur Anordnung in einer Saugleitung einer Zentralstaubsaugeranlage mit einem Gehäuse, wobei das Gehäuse eine Durchgangsöffnung zur Durchleitung der Saugluft aufweist, und wobei der Eingangsquerschnitt der Durchgangsöffnung an die Saugleitung anschließbar ist, und wobei der Ausgangsquerschnitt der Durchgangsöffnung an die Saugleitung anschließbar ist, und wobei das Gehäuse ein Sperrelement umfasst, wobei das Sperrelement zwischen einer Sperrstellung und einer Öffnungsstellung verstellbar ist, und wobei die Durchgangsöffnung in der Sperrstellung des Sperrelements verschlossen ist, wobei die Durchgangsöffnung in der Öffnungsstellung des Sperrelements geöffnet ist, und wobei das Sperrelement mit einer Antriebseinrichtung zwischen der Öffnungsstellung und der Sperrstellung verstellbar ist, wobei das Sperrelement in der Art eines plattenförmigen Sperrschiebers ausgebildet ist, wobei der Rand des Sperrschiebers in einer die Durchgangsöffnung zumindest teilweise umgreifenden Nut geführt ist.

Ein weiteres derartiges Absperrorgan zeigt die US 6 012 199 A.

Aus der CA 2 310 962 A1 geht ein weiteres Absperrorgan zur Anordnung in einer Saugleitung einer Zentralstaubsaugeranlage hervor, welches ein Sperrelement in der Art eines plattenförmigen Sperrschiebers umfasst, welches in einem Aufnahmeraum verschiebbar gelagert ist. Ein Öffnen bzw. Schließen des Sperrelements erfolgt hier händisch durch Aufbringen einer Kraft auf einen Griff durch einen Bediener.

Die US 5 111 841 A zeigt ein Absperrorgan zur Anordnung in einer Saugleitung einer Zentralstaubsaugeranlage, welches ein verschwenkbares Sperrelement umfasst. Das Sperrelement wird mittels einer Torsionsfeder in einer Sperrstellung gehalten. Durch Anschließen einer Saugleitung an einem Anschluss des Absperrorgans wird das Sperrelement verschwenkt und von der Sperrstellung in eine Öffnungsstellung überführt.

Letztlich offenbart die 2010/024618 A1 ein Absperrorgan zum Ein- bzw. Ausschalten einer mittels eines Saugventilators erzeugten Saugkraft. Zum Ausschalten der Saugkraft wird ein von einem pneumatischen Zylinder betätigtes Sperrelement geöffnet, sodass ein in einer Saugleitung bestehender Unterdruck weicht und sich ein atmosphärischer Druck in der Saugleitung einstellt. Anschließend kann ein Substrat, auf welches die Saugkraft zuvor einwirkte, ganz einfach entfernt werden.

Ausgehend von diesem Stand der Technik ist es deshalb Aufgabe der vorliegenden Erfindung ein neues Absperrorgan vorzuschlagen, das die Nachteile des bekannten Stands der Technik vermeidet. Diese Aufgabe wird durch ein Absperrorgan nach der Lehre des Anspruchs 1 gelöst.

Vorteilhafte Ausführungsformen der Erfindung sind Gegenstand der Unteransprüche.

Das erfindungsgemäße Absperrorgan wird durch ein Sperrelement charakterisiert, das in der Art eines plattenförmigen Sperrschiebers ausgebildet ist. Der Rand des Sperrschiebers ist dabei in einer die Durchgangsöffnung zumindest teilweise umgreifenden Nut geführt, wobei durch die Nut der Stellweg des Sperrschiebers zwischen der Öffnungsstellung und der Sperrstellung definiert wird. Erfindungsgemäß ist der Sperrschieber zwischen der Öffnungsstellung und der Sperrstellung entlang eines linearen Stellwegs verschiebbar im Gehäuse gelagert, wobei die Antriebseinrichtung in der Art eines Linearaktuators ausgebildet ist, wobei der Linearaktuator von einem elektrischen Antriebsmotor angetrieben wird, wobei der Linearaktuator ein Getriebe umfasst, das die rotatorische Antriebsbewegung des Antriebsmotors in eine lineare Antriebsbewegung des Linearaktuators übersetzt. Der plattenförmigen Sperrschieber kann auch aus mehreren Plattenelementen zusammengesetzt sein, um dadurch beispielsweise einen Blendenverschluss zu bilden. Der erfindungsgemäß verwendete plattenförmige Sperrschieber hat den Vorteil, dass er mit hoher Effektivität zwischen Sperrstellung und Öffnungsstellung verstellt werden kann, so dass eine hohe Stelldynamik erreichbar ist. Außerdem kann der Sperrschieber problemlos vollständig aus der Durchgangsöffnung des Gehäuses im Absperrorgan entfernt werden, so dass im Wesentlichen keine Saugleistungsverluste auftauchen. Durch das Einziehen des Sperrschiebers in die entsprechende Führungsnut wird außerdem eine weitgehende Selbstreinigung des Sperrschiebers realisiert, so dass die Ansammlung von Verschmutzungen im Bereich des Absperrorgans weitgehend ausgeschlossen ist.

Erfindungsgemäß ist der Sperrschieber zwischen der Öffnungsstellung und der Sperrstellung entlang eines linearen Stellwegs verschiebbar im Gehäuse gelagert.

Erfindungsgemäß findet Zum Antrieb des Sperrschiebers entlang des linearen Stellwegs ein Linearaktuator Verwendung.

Erfindungsgemäß wird der Linearaktuator von einem elektrischen Antriebsmotor angetrieben, da die Verlegung von elektrischen Leitungen in der Gebäudetechnik relativ einfach möglich ist, um den Linearaktuator mit dem elektrischen Versorgungsnetz des Gebäudes zu verbinden.

Erfindungsgemäß ist zwischen dem Linearaktuator und dem elektrischen Antriebsmotor ein Getriebe vorgesehen werden, das die rotatorische Antriebsbewegung des Antriebsmotors in eine lineare Antriebsbewegung des Linearaktuators übersetzt. Als Antriebsmotor kann ein konventioneller elektrischer Antriebsmotor mit drehbar gelagerter Antriebsachse Verwendung finden.

Um eine hohe Bewegungsdynamik des Sperrschiebers im Absperrorgan realisieren zu können, ist es gemäß einer bevorzugten Ausführungsform vorgesehen, dass der Stellweg des Sperrschiebers zwischen der Öffnungsstellung und der Sperrstellung rechtwinklig zur Mittelachse der Durchgangsöffnung verläuft. Auf diese Weise wird der Stellweg zwischen Öffnungsstellung und Sperrstellung minimiert und dadurch die Dynamik der Stellbewegung erhöht. Mit welcher Bewegungskinematik der Sperrschieber zwischen Öffnungsstellung und Sperrstellung verstellt wird, ist grundsätzlich beliebig.

Bevorzugt sollte der Linearaktuator mit einem Befestigungsflansch am Gehäuse des Absperrorgans befestigt sein, um auf diese Weise eine kompakte Bauform zu bilden. Durch Einbau des Absperrorgans in eine entsprechende Saugleitung kann dann problemlos auch der Linearaktuator in der gewünschten Position fixiert werden.

Gemäß einer bevorzugten Ausführungsform ist es vorgesehen, dass zwischen dem Linearaktuator und dem Sperrschieber eine Verbindungsstange vorgesehen wird. Die lineare Stellbewegung des Linearaktuators kann dann mit der Verbindungsstange auf den Sperrschieber übertragen werden.

Um eine besonders raumsparende Bauform zu ermöglichen, die bevorzugt auch in dünne Leichtbauwände integrierbar ist, ist es besonders vorteilhaft, wenn der Linearaktuator parallel zum Stellweg des Sperrelements am Gehäuse des Absperrorgans befestigt ist. Die Verbindungsstange zwischen Linearaktuator und Sperrschieber kann dann koaxial zur Zugstange des Sperrschiebers verlaufen, so dass sich eine geringe Breite des Absperrorgans ergibt, die auch in Leichtbauwandkonstruktionen integrierbar ist.

Im Hinblick auf den Brandschutz eines Gebäudes ist es von großer Bedeutung, dass durch die Saugleitungen der Zentralstaubsauganlagen im Falle eines Brands kein Rauchgas von einem Gebäudeteil in einen anderen Gebäudeteil übermittelt wird. Um dies zu verhindern, sollten die Absperrorgane bei Ausfall der Zentralsteuerung automatisch in ihre Sperrstellung gebracht werden, um die Saugleitungen zu unterbrechen. Um dies zu realisieren ist es gemäß einer bevorzugten Ausführungsvariante vorgesehen, dass an dem Absperrorgan eine Rückholeinrichtung vorgesehen wird. Sobald die Antriebseinrichtung des Absperrorgans funktionslos wird, beispielsweise im Falle eines Stromausfalls, wird der Sperrschieber durch die Rückholeinrichtung automatisch in die Sperrstellung verstellt.

In welcher Weise die Rückholeinrichtung zur automatischen Rückholung des Sperrschiebers in die Sperrstellung angetrieben wird, ist grundsätzlich beliebig. Die Rückholeinrichtung kann elektrisch pneumatisch oder hydraulisch angetrieben werden. Besonders einfach kann die Rückholeinrichtung in der Art einer entsprechend geformten Spannfeder federnd ausgebildet sein. Durch Antrieb der Antriebseinrichtung kann der Sperrschieber entgegen der Spannkraft der Spannfeder in seine Öffnungsstellung gebracht werden. Fällt nun der Strom aus, so wird der Sperrschieber durch die Spannfeder automatisch zurück in seine Sperrstellung gedrückt. Um das Absperrorgan in einfacher Weise an die entsprechenden Saugleitungen anschließen zu können, kann am Eingangsquerschnitt der Durchgangsöffnung des Gehäuses bzw. am Ausgangsquerschnitt der Durchgangsöffnung des Gehäuses jeweils ein Rohrflansch vorgesehen werden. Mit diesem Rohrflansch kann dann das Absperrorgan problemlos in eine rohrförmige Saugleitung integriert werden.

Das erfindungsgemäße Absperrorgan eignet sich bevorzugt für Zentralstaubsauganlagen mit einer Hauptsteuerung, die die unterschiedlichen Funktionen der Zentralstaubsauganlage zentral steuert. Um dies zu realisieren ist es besonders vorteilhaft, wenn das Absperrorgan selbst ein Steuerungsmodul umfasst, mit dem das Absperrorgan von der Hauptsteuerung der Zentralstaubsauganlage ansteuerbar ist. Dadurch kann ein modularer Aufbau der Zentralstaubsauganlage realisiert werden, die somit in einfacher Weise auf das jeweilige Anforderungsprofil erweitert werden kann.

Im Hinblick auf eine möglichst einfache Kommunikation der unterschiedlichen Funktionsmodule der Zentralstaubsauganlage ist es besonders vorteilhaft, wenn das Steuerungsmodul im Absperrorgan eine Kommunikationsschnittstelle umfasst, mit der das Steuerungsmodul Daten über ein Bussystem mit der Hauptsteuerung der Zentralstaubsauganlage austauschen kann.

Eine Ausführungsform der Erfindung ist den Zeichnungen schematisiert dargestellt und wird nachfolgend beispielhaft erläutert.

Es zeigen:
- **Fig. 1**: ein erfindungsgemäßes Absperrorgan im Querschnitt;
- **Fig. 2**: das Absperrorgan gemäß Fig. 1 in perspektivischer seitlicher Ansicht;
- **Fig. 3**: das Absperrorgan gemäß Fig. 1 in seitlicher Ansicht;
- **Fig. 4**: das Absperrorgan gemäß Fig. 1 in Ansicht von unten;
- **Fig. 5**: das Absperrorgan gemäß Fig. 1 nach Integration in eine Saugleitung einer Zentralstaubsauganlage in perspektivischer Ansicht;
- **Fig. 6**: das Absperrorgan mit Saugleitung gemäß Fig. 5 in Ansicht von vorne.

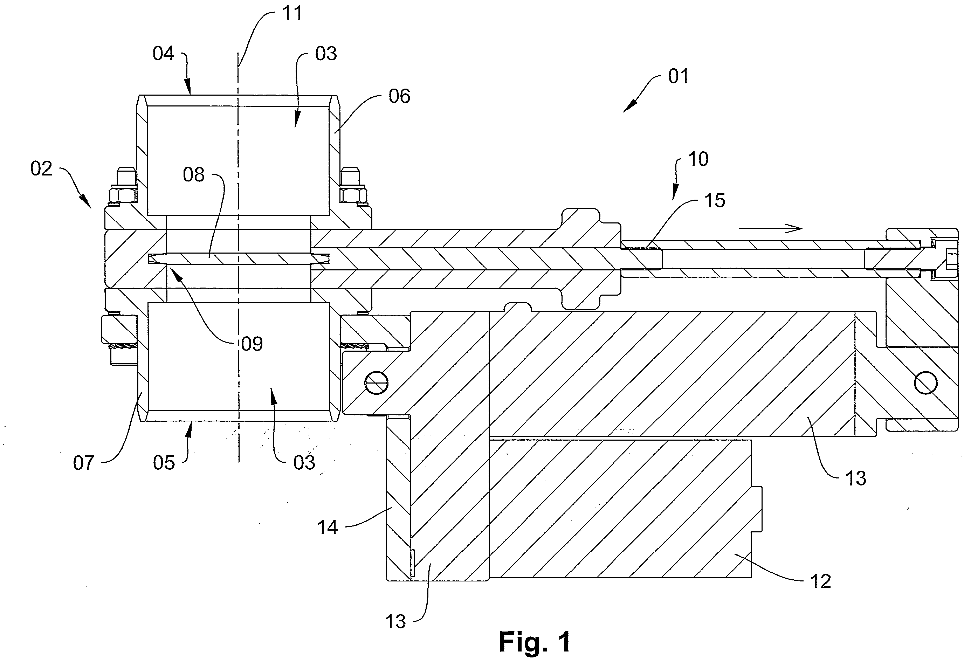

**Fig. 1** zeigt ein Absperrorgan 01 zur Integration für eine Saugleitung einer Zentralstaubsauganlage im Querschnitt. Das Absperrorgan 01 weist eine Gehäuse 02 auf, in dem eine Durchgangsöffnung 03 zwischen einem Eingangsquerschnitt 04 und einem Ausgangsquerschnitt 05 gebildet ist. Der Eingangsquerschnitt 04 bzw. der Ausgangsquerschnitt 05 ist dabei jeweils durch einen Rohrflansch 06 bzw. 07 gebildet, welche in ein Saugrohr einer Zentralstaubsauganlage integrierbar sind. Auf diese Weise kann dann die Saugluft der Zentralstaubsauganlage durch die Durchgangsöffnung 03 hindurchströmen. In der Mitte zwischen dem Eingangsquerschnitt 04 und dem Ausgangsquerschnitt 05 ist ein Sperrelement vorgesehen, das in der Art eines plattenförmigen Sperrschiebers 08 ausgebildet ist. In Fig. 1 befindet sich der Sperrschieber in seiner Sperrstellung, in der die Durchgangsöffnung 03 durch den Sperrschieber 08 versperrt ist, so dass keine Saugluft durch die Durchgangsöffnung 03 strömen kann. Der Sperrschieber 08 ist in einer die Durchgangsöffnung 03 an drei Seiten umgreifenden Nut 09 geführt.

Zur Verstellung des Sperrschiebers 08 zwischen seiner in Fig. 1 dargestellten Sperrstellung und einer die Durchgangsöffnung 03 vollständig öffnenden Öffnungsstellung ist ein Linearaktuator 10 vorgesehen, mit dem der Sperrschieber rechtwinklig zur Mittelachse 11 der Durchgangsöffnung 03 aus dem Gehäuse 02 entlang eines linearen Stellwegs herausgezogen werden kann.

Zum Antrieb des Linearaktuators 10 dient ein elektrischer Antriebsmotor 12, dessen rotatorisch angetriebene Antriebswelle in Fig. 1 nicht im Einzelnen dargestellt ist. Die Antriebswelle des Antriebsmotors 12 wirkt über ein Getriebe 13 auf den Linearaktuator 10, wobei in dem Getriebe 13 die rotatorische Antriebsbewegung des Antriebsmotors 12 in eine lineare Stellbewegung des Linearaktuators 10 übersetzt wird. Der Linearaktuator 10 mit dem Antriebsmotor 12 wird mittels eines Befestigungsflansches 14 mit dem Gehäuse 02 des Absperrorgans 01 verbunden und bildet auf diese Weise eine kompakte Baugruppe. Der Linearaktuator 10 ist parallel zum Stellweg des Sperrschiebers 08 am Gehäuse 02 des Absperrorgans 01 befestigt, wobei zwischen Linearaktuator 10 und Sperrschieber 08 eine Verbindungsstange 15 vorgesehen ist, der die lineare Stellbewegung des Linearaktuators 10 auf den Sperrschieber 08 überträgt.

Im Linearaktuator 10 ist eine in Fig. 1 nicht im Einzelnen dargestelltes Steuerungsmodul vorgesehen, das mittels einer Kommunikationsschnittstelle Daten entlang eines Bussystems mit der Hauptsteuerung einer Zentralstaubsauganlage austauschen kann.

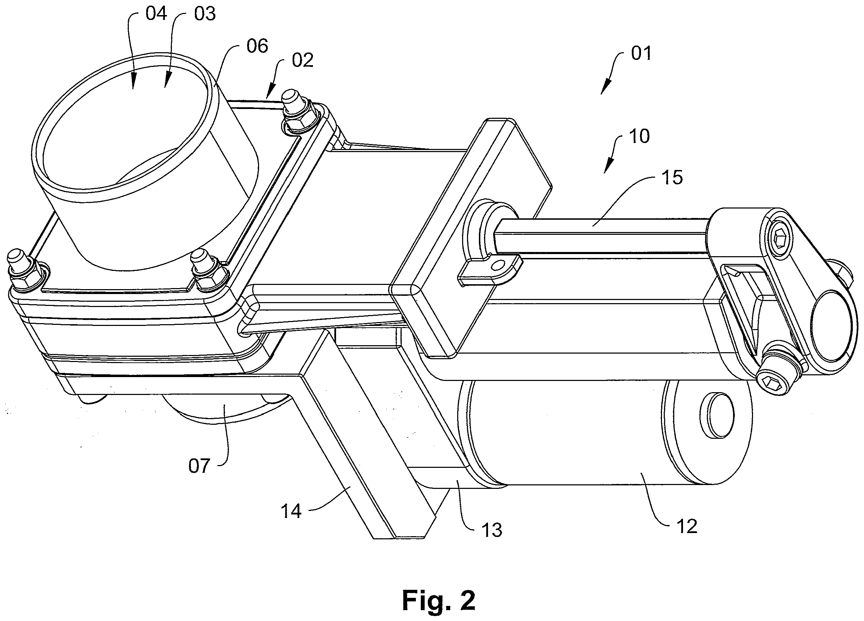

**Fig. 2** zeigt das Absperrorgan 01 in perspektivischer seitlicher Ansicht. Man erkennt das Gehäuse 02 mit dem Rohrflansch 06 und 07 und die Verbindungsstange 15 zur Übertragung der linearen Stellbewegung des Linearaktuators 10 auf dem im Gehäuse 02 angeordneten Sperrschieber 08.

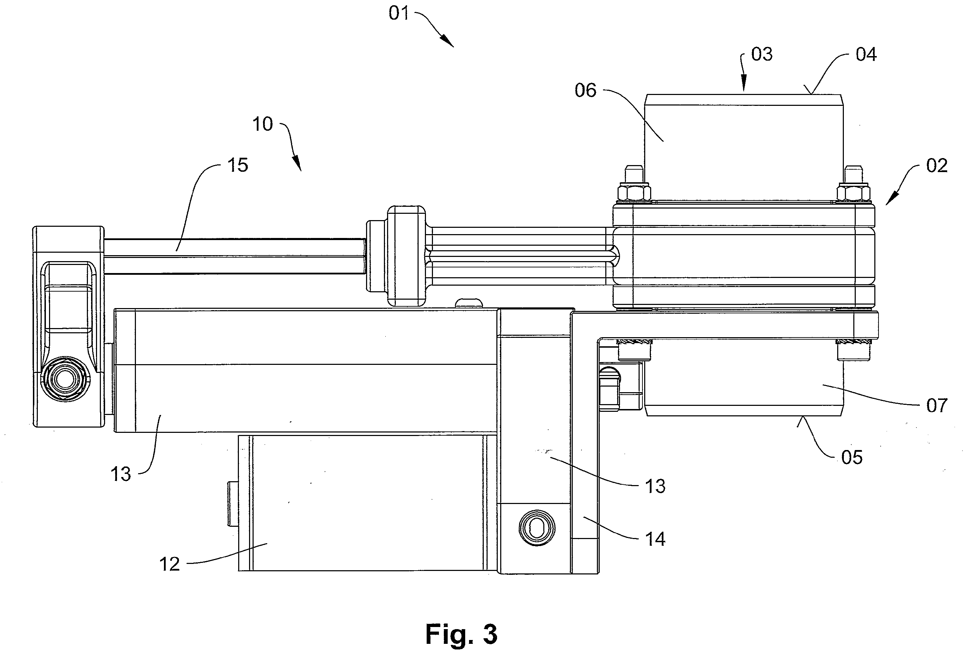

**Fig. 3** zeigt das Absperrorgan 01 in seitlicher Ansicht. Man erkennt die kompakte Bauform des Absperrorgans 01.

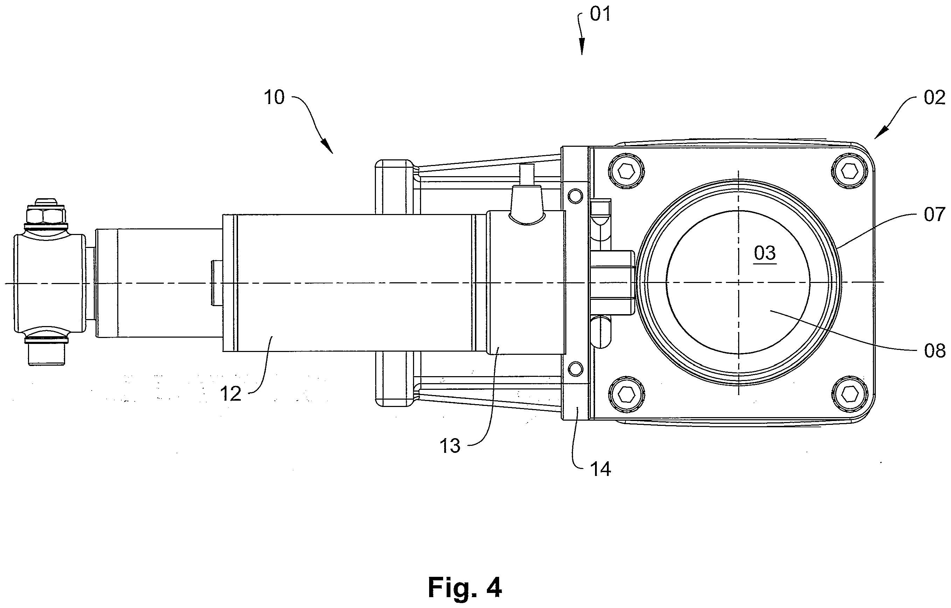

**Fig. 4** zeigt das Absperrorgan 01 in Ansicht von unten. Man erkennt die relativ geringe Breite des Absperrorgans 01, die letztendlich durch die Breite des Gehäuses 02 definiert ist und dadurch auch in Konstruktionen aus Leichtbauwänden mit geringem Wandquerschnitt problemlos integriert werden kann.

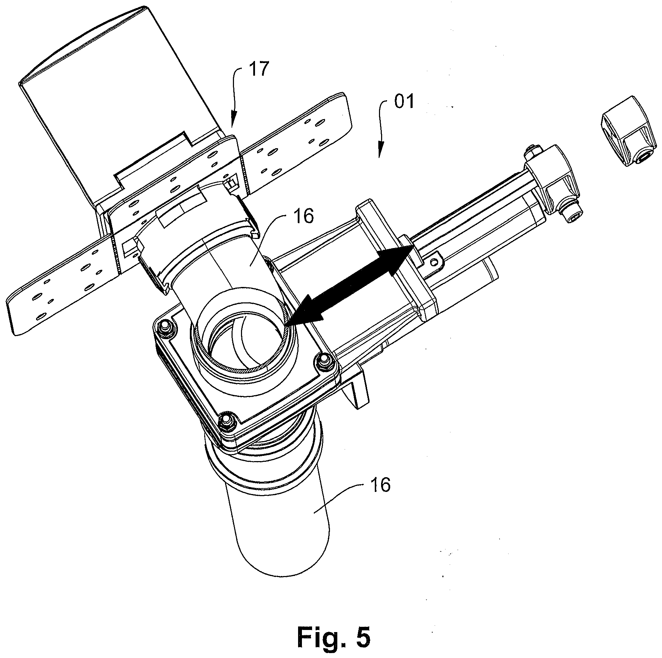

**Fig. 5** zeigt das Absperrorgan 01 nach Einbau in eine Saugleitung 16 einer Zentralstaubsauganlage im Bereich einer Zapfstelle 17, an der ein geeignetes Reinigungsgerät zur Entnahme von Saugluft angeschlossen werden kann.

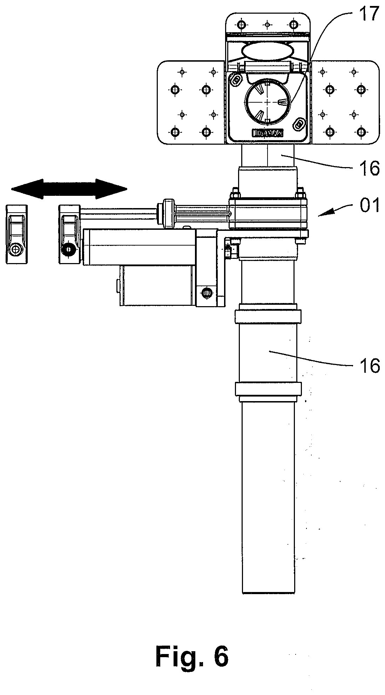

In **Fig. 6** ist das Absperrorgan 01 mit der Saugleitung 16 und der Zapfstelle 17 in seitlicher Ansicht dargestellt.

## Patentansprüche

1. Absperrorgan (01) zur Anordnung in einer Saugleitung (16) einer Zentralstaubsaugeranlage mit einem Gehäuse (02), wobei das Gehäuse (02) eine Durchgangsöffnung (03) zur Durchleitung der Saugluft aufweist, und wobei der Eingangsquerschnitt (04) der Durchgangsöffnung (03) an die Saugleitung (16) anschließbar ist, und wobei der Ausgangsquerschnitt (05) der Durchgangsöffnung (03) an die Saugleitung (16) anschließbar, und wobei das Gehäuse (02) ein Sperrelement umfasst, wobei das Sperrelement zwischen einer Sperrstellung und einer Öffnungsstellung verstellbar ist, und wobei die Durchgangsöffnung (03) in der Sperrstellung des Sperrelements verschlossen ist, und wobei die Durchgangsöffnung (03) in der Öffnungsstellung des Sperrelements geöffnet ist, und wobei das Sperrelement mit einer Antriebseinrichtung zwischen der Öffnungsstellung und der Sperrstellung verstellbar ist,
**dadurch gekennzeichnet,**
**dass** das Sperrelement in der Art eines plattenförmigen Sperrschiebers (08) ausgebildet ist, wobei der Rand des Sperrschiebers (08) in einer die Durchgangsöffnung (03) zumindest teilweise umgreifenden Nut (09) geführt ist, wobei der Sperrschieber zwischen der Öffnungsstellung und der Sperrstellung entlang eines linearen Stellwegs verschiebbar im Gehäuse gelagert ist, wobei die Antriebseinrichtung in der Art eines Linearaktuators (10) ausgebildet ist, wobei der Linearaktuator von einem elektrischen Antriebsmotor (12) angetrieben wird, wobei der Linearaktuator ein Getriebe (13) umfasst, das die rotatorische Antriebsbewegung des Antriebsmotors in eine lineare Antriebsbewegung des Linearaktuators übersetzt.

2. Absperrorgan nach Anspruch 1,
**dadurch gekennzeichnet,**
**dass** der Stellweg des Sperrschiebers (08) zwischen der Öffnungsstellung und der Sperrstellung rechtwinklig zur Mittelachse (11) der Durchgangsöffnung (03) verläuft.

3. Absperrorgan nach einem der vorangehenden Ansprüche,
**dadurch gekennzeichnet,**
**dass** der Linearaktuator (10) mit einem Befestigungsflansch (14) am Gehäuse (02) des Absperrorgans (01) befestigt ist.

4. Absperrorgan nach einem der vorangehenden Ansprüche,
**dadurch gekennzeichnet,**
**dass** der Linearaktuator (10) mittels einer Verbindungsstange (15) mit dem Sperrschieber (08) verbunden ist.

5. Absperrorgan nach Anspruch 4,
**dadurch gekennzeichnet,**
**dass** der Linearaktuator (10) parallel zum Stellweg des Sperrschiebers (08) am Gehäuse (02) des Absperrorgans (01) befestigt ist, wobei die Verbindungsstange (15) koaxial zur Zugstange des Sperrschiebers (08) verläuft.

6. Absperrorgan nach einem der Ansprüche 1 bis 5,
**dadurch gekennzeichnet,**
**dass** das Absperrorgan (01) eine Rückholeinrichtung aufweist, wobei die Rückholeinrichtung den Sperrschieber bei funktionsloser Antriebseinrichtung automatisch in die Sperrstellung verstellt.

7. Absperrorgan nach Anspruch 6,
**dadurch gekennzeichnet,**
**dass** die Rückholeinrichtung in der Art einer Spannfeder ausgebildet ist.

8. Absperrorgan nach einem der Ansprüche 1 bis 7,
**dadurch gekennzeichnet,**
**dass** am Eingangsquerschnitt (04) der Durchgangsöffnung (03) und/oder am Ausgangsquerschnitt (05) der Durchgangsöffnung (03) ein Rohrflansch (06, 07) vorgesehen ist an dem eine rohrförmige Saugleitung (16) anschließbar ist.

9. Absperrorgan nach einem der Ansprüche 1 bis 8,
**dadurch gekennzeichnet,**
**dass** das Absperrorgan (01) ein Steuerungsmodul umfasst, mit dem das Absperrorgan von einer Hauptsteuerung der Zentralstaubsaugeranlage ansteuerbar ist.

10. Absperrorgan nach Anspruch 9,
**dadurch gekennzeichnet,**
**dass** das Steuerungsmodul eine Kommunikationsschnittstelle umfasst, mit der das Steuerungsmodul des Absperrorgans (01) Daten über ein Bussystem mit der Hauptsteuerung der Zentralstaubsaugeranlage austauschen kann.

## Claims

1. A shut-off valve (01) for being disposed in a suction pipe (16) of a central vacuum system, the shut-off valve (01) having a housing (02), the housing (02) having a passage opening (03) for the passage of suction air, and the entry cross section (04) of the passage opening (03) being configured to be connected to the suction pipe (16), and the exit cross section (05) of the passage opening (03) being configured to be connected to the suction pipe (16), the housing (02) comprising a blocking element, the blocking element being configured to be shifted between a blocking position and an open position, and the passage opening (03) being closed when the blocking element is in the blocking position, and the passage opening (03) being open when the blocking element is in the open position, and the blocking element being configured to be shifted between the open position and the blocking position by a drive,
**characterized in that**
the blocking element is a plate-shaped gate valve (08), the edge of the gate valve (08) being guided in a groove (09) at least partially surrounding the passage opening (03), the gate valve being mounted in the housing in such a manner that it can be shifted between the open position and the blocking position along a linear travel, the drive being a linear actuator (10), the linear actuator being driven by an electric drive motor (12), the linear actuator comprising a gear mechanism (13) translating the rotatory drive movement of the drive motor into a linear drive movement of the linear actuator.

2. The shut-off valve according to claim 1,
**characterized in that**
the travel of the gate valve (08) between the open position and the blocking position runs at a right angle with respect to the center axis (11) of the passage opening (03).

3. The shut-off valve according to any one of the preceding claims,
**characterized in that**
the linear actuator (10) is attached to the housing (02) of the shut-off valve (01) by means of a mounting flange (14).

4. The shut-off valve according to any one of the preceding claims,
**characterized in that**
the linear actuator (10) is connected to the gate valve (08) by means of a connecting bar (15).

5. The shut-off valve according to claim 4,
**characterized in that**
the linear actuator (10) is attached to the housing (02) of the shut-off valve (01) parallel to the travel of the gate valve (08), the connecting bar (15) running coaxially to the pull bar of the gate valve (08).

6. The shut-off valve according to any one of claims 1 to 5,
**characterized in that**
the shut-off valve (01) has a return member, the return member automatically moving the gate valve into the blocking position when the drive is non-operational.

7. The shut-off valve according to claim 6,
**characterized in that**
the return member is a tension spring.

8. The shut-off valve according to any one of claims 1 to 7,
**characterized in that**
a pipe flange (06, 07) is provided at the entry cross section (04) of the passage opening (03) and/or at the exit cross section (05) of the passage opening (03), a tubular suction pipe (16) being attachable to the pipe flange (06, 07).

9. The shut-off valve according to any one of claims 1 to 8,
**characterized in that**
the shut-off valve (01) comprises a control module allowing the shut-off valve to be controlled from a main control unit of the central vacuum system.

10. The shut-off valve according to claim 9,
**characterized in that**
the control module comprises a communication interface allowing the control module of the shut-off valve (01) to exchange data with the main control unit of the central vacuum system via a bus system.

## Revendications

1. Organe d'arrêt (01) destiné à être disposé dans un conduit
d'aspiration (16) d'un système d'aspiration centralisé, l'organe d'arrêt (01) ayant un boitier (02), le boitier (02) ayant un trou de passage (03) pour le passage de l'air d'aspiration, et la section d'entrée (04) du trou de passage (03) étant configurée pour être raccordée au conduit d'aspiration (16), et la section de sortie (05) du trou de passage (03) étant configurée pour être raccordée au conduit d'aspiration (16), le boitier (02) comprenant un élément d'arrêt, l'élément d'arrêt étant configuré pour être déplacé entre une position d'arrêt et une position ouverte, et le trou de passage (03) étant fermé quand l'élément d'arrêt est dans la position d'arrêt, et le trou de passage (03) étant ouvert quand l'élément d'arrêt est dans la position ouverte, et l'élément d'arrêt étant configuré pour être déplacé entre la position ouverte et la position d'arrêt par un entraînement,
**caractérisé en ce que**
l'élément d'arrêt est une vanne d'arrêt (08) en forme de plaque, le bord de la vanne d'arrêt (08) étant guidé dans une rainure (09) entourant au moins une partie du trou de passage (03), la vanne d'arrêt étant montée dans le boitier de telle manière qu'elle peut être déplacée entre la position ouverte et la position d'arrêt le long d'une course linéaire, l' entraînement étant un actionneur linéaire (10), l'actionneur linéaire étant entraîné par un moteur d'entraînement (12) électrique, l'actionneur linéaire comprenant un engrenage (13) traduisant le mouvement d'entraînement rotatif du moteur d'entraînement en mouvement d'entraînement linéaire de l'actionneur linéaire.

2. Organe d'arrêt selon la revendication 1,
**caractérisé en ce que**
la course de la vanne d'arrêt (08) entre la position ouverte et la position d'arrêt s'étend à un angle droit par rapport à l'axe central (11) du trou de passage (03).

3. Organe d'arrêt selon l'une quelconque des revendications précédentes,
**caractérisé en ce que**
l'actionneur linéaire (10) est fixé au boitier (02) de l'organe d'arrêt (01) par l'intermédiaire d'une bride de fixation (14).

4. Organe d'arrêt selon l'une quelconque des revendications précédentes,
**caractérisé en ce que**
l'actionneur linéaire (10) est lié à la vanne d'arrêt (08) par l'intermédiaire d'une barre de liaison (15).

5. Organe d'arrêt selon la revendication 4,
**caractérisé en ce que**
l'actionneur linéaire (10) est fixé au boitier (02) de l'organe d'arrêt (01) parallèle à la course de la vanne d'arrêt (08), la barre de liaison (15) s'étendant coaxialement à la barre de traction de la vanne d'arrêt (08).

6. Organe d'arrêt selon l'une quelconque des revendications 1 à 5,
**caractérisé en ce que**
l'organe d'arrêt (01) a un élément de rappel, l'élément de rappel déplaçant automatiquement la vanne d'arrêt dans la position d'arrêt quand l'entraînement ne marche pas.

7. Organe d'arrêt selon la revendication 6,
**caractérisé en ce que**
l'élément de rappel est un ressort de tension.

8. Organe d'arrêt selon l'une quelconque des revendications 1 à 7,
**caractérisé en ce**
**qu'**une bride de tuyau (06, 07) est disposée à la section d'entrée (04) du trou de passage (03) et/ou à la section de sortie (05) du trou de passage (03), un conduit d'aspiration (16) tubulaire pouvant être raccordé à la bride de tuyau (06, 07).

9. Organe d'arrêt selon l'une quelconque des revendications 1 à 8,
**caractérisé en ce que**
l'organe d'arrêt (01) comprend un module de commande permettant au l'organe d'arrêt d'être commandé depuis une unité de commande principale du système d'aspiration centralisé.

10. Organe d'arrêt selon la revendication 9,
**caractérisé en ce que**
le module de commande comprend une interface de communication permettant au module de commande de l'organe d'arrêt (01) d'échanger des données avec l'unité de commande principale du système d'aspiration centralisé par l'intermédiaire d'un système de bus.
